# EUROPEAN PATENT SPECIFICATION

(11) **EP 3 672 369 B1**
(45) Date of publication and mention of the grant of the patent: **05.10.2022**
(21) Application number: 18213074.0
(22) Date of filing: 17.12.2018
(51) Int. Cl.: H05B 45/10, H05B 47/105, F21S 41/663, B60Q 1/12

(54) **METHOD FOR CONTROLLING A LIGHT PATTERN AND AUTOMOTIVE LIGHTING DEVICE**
VERFAHREN ZUR STEUERUNG EINES LICHTMUSTERS UND AUTOMOBILBELEUCHTUNGSVORRICHTUNG
PROCÉDÉ DE COMMANDE D'UN MOTIF LUMINEUX ET DISPOSITIF D'ÉCLAIRAGE AUTOMOBILE

(43) Date of publication of application: 24.06.2020
(73) Proprietor: Valeo Vision, 93012 Bobigny Cedex (FR)
(72) Inventor: PRAT, Constantin, 93012 Bobigny Cedex (FR); KANJ, Ali, 93012 Bobigny Cedex (FR)
(74) Representative: Valeo Visibility

(56) References cited:
- EP-A2- 2 911 478
- US-A1- 2010 264 824
- US-A1- 2016 144 771

## Description

### TECHNICAL FIELD

This invention is related to the field of automotive lighting devices, and more particularly, to the way light patterns are managed when using a Dynamic Bending Light (DBL) functionality.

### STATE OF THE ART

Dynamic Bending Lights are increasingly present in current automotive lighting devices, becoming an upgrade to standard headlights and designed to make driving at night easier and safer.

To implement such a lighting functionality, there have been many solutions intended to provide a light pattern in the direction of the movement of the vehicle when it is entering a curve.

Mechanic-based solutions turn the lighting source as the steering wheel does, by means of an angular movement converter which directly uses the turning of the steering wheel to induce a turning in the lighting source. The lights will turn in whatever direction the wheel does, and this range of motion allows the lights to illuminate the road even when taking sharp turns or turning quickly.

This solution has received a huge number of improvements, so that the turning of the light source is more effective and also takes into account different driving circumstances.

An alternative solution for this problem is sought. The document EP2911478A2 discloses the features of the preamble of claim 1.

### SUMMARY OF THE INVENTION

The invention provides an alternative solution for providing a dynamic bending light by a method for controlling a light pattern according to claim 1.

Preferred embodiments of the invention are defined in dependent claims.

Unless otherwise defined, all terms (including technical and scientific terms) used herein are to be interpreted as is customary in the art. It will be further understood that terms in common usage should also be interpreted as is customary in the relevant art and not in an idealised or overly formal sense unless expressly so defined herein.

In this text, the term "comprises" and its derivations (such as "comprising", etc.) should not be understood in an excluding sense, that is, these terms should not be interpreted as excluding the possibility that what is described and defined may include further elements, steps, etc.

In a first inventive aspect, the invention provides a method for controlling a light pattern provided by an automotive lighting device of an automotive vehicle, wherein the light pattern is provided at least by a matrix arrangement of light sources, the method comprising the steps of
sensing a turn in a steering system of the automotive vehicle
shifting the operation of some of the light sources in the same direction as the sensed turn.

This method provides a controlled light pattern which includes a Dynamic Bending Light functionality, provided by the same lighting device that provides, for example, the low beam functionality, without moving parts and also being able to adapt to other driving circumstances, such as the driving speed or the presence of cars in the opposite direction.

The shifting in the operation should be understood as displacing one or more columns to the right or to the left, depending on the movement of the steering system, the light pattern provided in the matrix: if the original pattern in one row is, e.g., 0-0-1-1-0, where 0 is a light turned off and 1 is a light turned on, after a 1 column shift to the left, the resulting pattern would be 0-1-1-0-0, and after a 1 column shift to the right, the resulting pattern would be 0-0-0-1-1.

In some particular embodiments of this method, the light pattern comprises a fixed beam provided by a first group of solid-state light sources and a dynamic beam provided by a matrix arrangement of solid-state light sources, and the step of shifting the operation of the light sources is applied to at least part of the solid-state light sources of the matrix arrangement which provide the dynamic beam.

The term "solid state" refers to light emitted by solid-state electroluminescence, which uses semiconductors to convert electricity into light. Compared to incandescent lighting, solid state lighting creates visible light with reduced heat generation and less energy dissipation. The typically small mass of a solid-state electronic lighting device provides for greater resistance to shock and vibration compared to brittle glass tubes/bulbs and long, thin filament wires. They also eliminate filament evaporation, potentially increasing the life span of the illumination device. Some examples of these types of lighting comprise semiconductor light-emitting diodes (LEDs), organic light-emitting diodes (OLED), or polymer light-emitting diodes (PLED) as sources of illumination rather than electrical filaments, plasma or gas.

The combination of a fixed beam and a matrix beam arrangement is a very common solution for current headlamps. The matrix arrangement is in charge of providing some lighting functionalities and, with the method of the invention, this matrix beam is also configured to provide a Dynamic Bending Light functionality without adding any additional element.

In some particular embodiments of this method, the step of shifting the operation of the light sources is applied to the whole number of solid-state light sources which provide the dynamic beam.

As a consequence, the resulting light pattern will be very similar to the original one, due to the homogeneity of the fixed beam. There is no need of an intermediate step to decide which portion of the lighting sources are to be shifted and which ones are not.

In some particular embodiments the method further comprises the step of applying a correction in the luminous intensity of the light emitted by the solid-state light sources.

In some light patterns, where the homogeneity of the fixed beam is not enough to compensate the change in the light provided by the matrix arrangement, the intensity of some of the light sources may need to be corrected.

In some particular embodiments of this method, the correction depends on the luminous intensity of the fixed beam. Since the lack of compliance involves the fixed beam, and the effect of a change in the light pattern affects the sum of the fixed beam and the dynamic beam, the correction depends on the lack of homogeneity of the fixed beam.

In the first inventive aspect, before the step of shifting the operation of the light sources, the angular displacement of the steering system is sensed and converted into a number of positions to shift, and then the step of shifting is carried out using this number of positions to shift.

The matrix of solid-state light sources may have many different angular resolutions.

Depending on the number and arrangement of these light sources, resolution may vary from 0.01° per light source up to 0.5° per light source. Hence, the angular position of the steering wheel may be translated in a different number of columns of the light array, depending on the density of these light sources in the array arrangement.

In the first inventive aspect, the method further comprises, after the step of shifting, the step of internally checking the luminous intensity in one point of the light pattern.

Due to the changes which are caused in the total light pattern due to the shifting of a portion of it, it is sometimes necessary to check if some of the light points which are regulated by the official law still accomplishes its luminous intensity standards.

A second aspect not covered by the scope of the claims provides an automotive lighting device comprising
a first group of solid-state light sources, intended to provide a fixed beam
a matrix arrangement of solid-state light sources, intended to provide a dynamic beam control means.

This automotive lighting device is configured to provide a Dynamic Bending Light functionality without moving parts, and using elements which are already available, but with a new configuration.

In some particular embodiments, the matrix arrangement comprises at least 2000 solid-state light sources.

This invention can be useful for many types of lighting matrix/array-based technology, from the simplest one, with only a few thousands light sources, to more advanced one, with several hundred thousand one.

In some particular embodiments, the dynamic beam comprises at least part of the cut-off of the light pattern.

Where the Dynamic Bending Light is applied over the low beam functionality, the original light pattern comprises a cut-off, according to current regulations. However, the invention may be also applied to other lighting functionalities without a cut-off, such as high beam.

### BRIEF LIST OF DRAWINGS AND REFERENCE NUMBERS

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out. The drawings comprise the following figures:
Figure 1 shows a general perspective view of an automotive vehicle comprising an automotive lighting device.
Figure 2 shows a closer view of a particular embodiment of a lighting device.
Figure 3 shows a light pattern projected by the lighting device of figure 2.
Figures 4a and 4b show a detailed view of the operation of this matrix arrangement, before the steering system is being operated and thereafter.

Elements of the example embodiments are consistently denoted by the same reference numerals throughout the drawings and detailed description where appropriate:
- 1: Light pattern
- 2: LED
- 3: Fixed beam
- 4: First lighting module
- 5: Remainder of a low beam pattern
- 6: Matrix arrangement
- 7: Control centre
- 10: Lighting device
- 11: Steering system
- 100: Automotive vehicle

### DETAILED DESCRIPTION OF THE INVENTION

The example embodiments are described in sufficient detail to enable those of ordinary skill in the art to embody and implement the systems and processes herein described. It is important to understand that embodiments can be provided in many alternate forms and should not be construed as limited to the examples set forth herein.

Accordingly, while embodiment can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included.

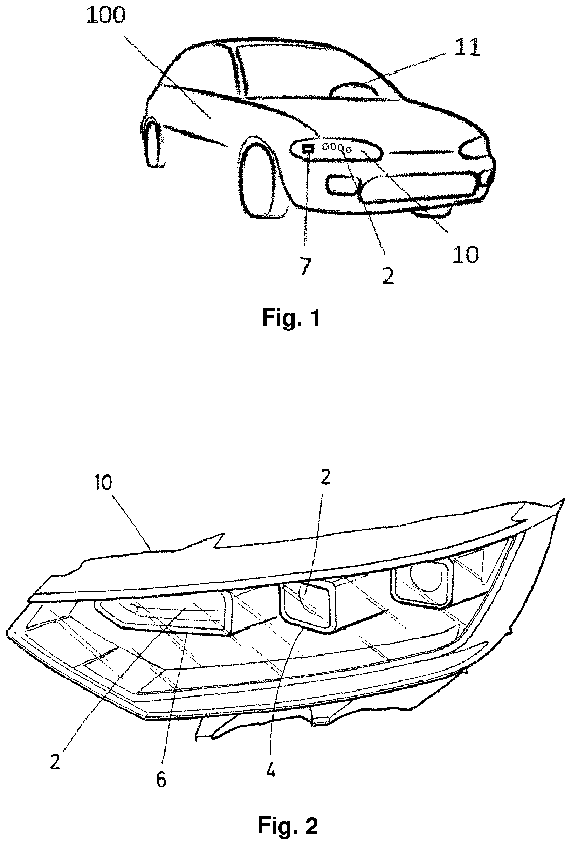

Figure 1 shows a general perspective view of an automotive vehicle 100 comprising an automotive lighting device 10.

This automotive vehicle 100 comprises a steering system 11 and a lighting device 10. The lighting device 10 comprises a plurality of groups of LEDs 2 and a control centre 7 which is configured to control the operation of these groups of LEDs.

The control centre 7 is configured to modify the configuration of the LEDs 2 when the steering wheel of the vehicle is activated.

Figure 2 shows a closer view of a particular embodiment of a lighting device 10.

This lighting device 10 comprises a first group of LEDs 2 which are grouped in a first lighting module 4 and a second group of LEDs 2 which are arranged in a matrix configuration 6.

This matrix configuration 6 is a high-resolution module, having a resolution greater than 1000 pixels. However, no restriction is attached to the technology used for producing the projection modules.

A first example of this matrix configuration comprises a monolithic source. This monolithic source comprises a matrix of monolithic electroluminescent elements arranged in several columns by several rows. In a monolithic matrix, the electroluminescent elements can be grown from a common substrate and are electrically connected to be selectively activatable either individually or by a subset of electroluminescent elements. The substrate may be predominantly made of a semiconductor material. The substrate may comprise one or more other materials, for example non-semiconductors (metals and insulators). Thus, each electroluminescent element/group can form a light pixel and can therefore emit light when its/their material is supplied with electricity. The configuration of such a monolithic matrix allows the arrangement of selectively activatable pixels very close to each other, compared to conventional light-emitting diodes intended to be soldered to printed circuit boards. The monolithic matrix may comprise electroluminescent elements whose main dimension of height, measured perpendicularly to the common substrate, is substantially equal to one micrometre.

The monolithic matrix is coupled to the control centre so as to control the generation and/or the projection of a pixilated light beam by the matrix arrangement 6. The control centre is thus able to individually control the light emission of each pixel of the matrix arrangement.

Alternatively to what has been presented above, the matrix arrangement 6 may comprise a main light source coupled to a matrix of mirrors. Thus, the pixelated light source is formed by the assembly of at least one main light source formed of at least one light emitting diode emitting light and an array of optoelectronic elements, for example a matrix of micro-mirrors, also known by the acronym DMD, for "Digital Micro-mirror Device", which directs the light rays from the main light source by reflection to a projection optical element. Where appropriate, an auxiliary optical element can collect the rays of at least one light source to focus and direct them to the surface of the micro-mirror array.

Each micro-mirror can pivot between two fixed positions, a first position in which the light rays are reflected towards the projection optical element, and a second position in which the light rays are reflected in a different direction from the projection optical element. The two fixed positions are oriented in the same manner for all the micro-mirrors and form, with respect to a reference plane supporting the matrix of micro-mirrors, a characteristic angle of the matrix of micro-mirrors defined in its specifications. Such an angle is generally less than 20° and may be usually about 12°. Thus, each micro-mirror reflecting a part of the light beams which are incident on the matrix of micro-mirrors forms an elementary emitter of the pixelated light source. The actuation and control of the change of position of the mirrors for selectively activating this elementary emitter to emit or not an elementary light beam is controlled by the control centre.

In different embodiments, the matrix arrangement may comprise a scanning laser system wherein a laser light source emits a laser beam towards a scanning element which is configured to explore the surface of a wavelength converter with the laser beam. An image of this surface is captured by the projection optical element.

The exploration of the scanning element may be performed at a speed sufficiently high so that the human eye does not perceive any displacement in the projected image.

The synchronized control of the ignition of the laser source and the scanning movement of the beam makes it possible to generate a matrix of elementary emitters that can be activated selectively at the surface of the wavelength converter element. The scanning means may be a mobile micro-mirror for scanning the surface of the wavelength converter element by reflection of the laser beam. The micro-mirrors mentioned as scanning means are for example MEMS type, for "Micro-Electro-Mechanical Systems". However, the invention is not limited to such a scanning means and can use other kinds of scanning means, such as a series of mirrors arranged on a rotating element, the rotation of the element causing a scanning of the transmission surface by the laser beam.

In another variant, the light source may be complex and include both at least one segment of light elements, such as light emitting diodes, and a surface portion of a monolithic light source.

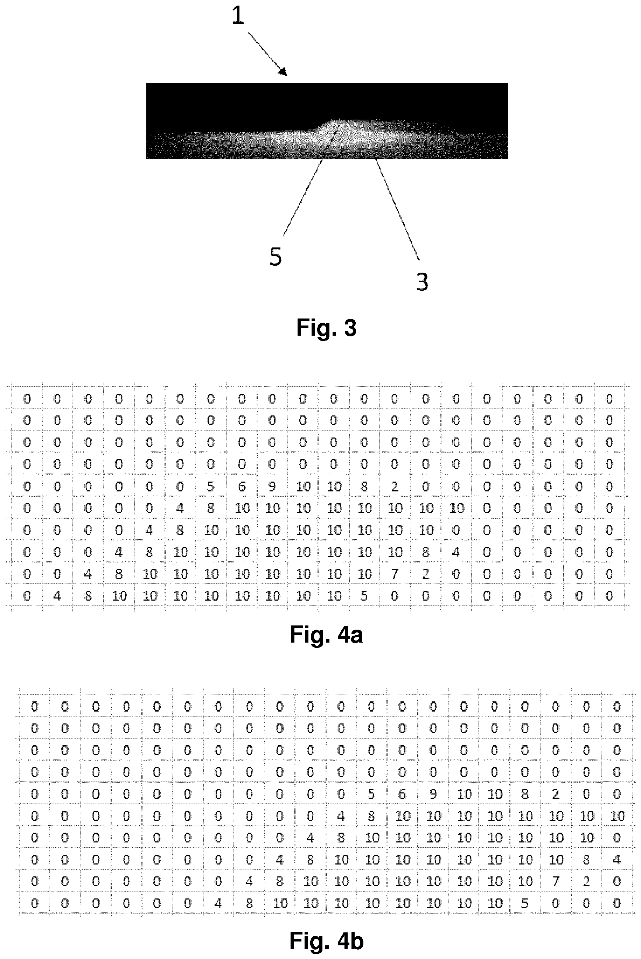

Figure 3 shows a light pattern 1 projected by this lighting device. The first light module projects a fixed beam 3 and the matrix arrangement, in this case, is configured to project the remainder 5 of a low beam pattern.

In this case, this remainder 5 comprises the cut-off of the light pattern. In other lighting applications, such as a high beam, there is no cut-off, and the matrix arrangement projects a different light scheme.

Figure 4a shows a detailed view of the operation of this matrix arrangement. In this figure, 20 columns and 10 rows of the matrix arrangement are seen. In each cell, one number from 1 to 10 represents the luminous intensity of the associated LED, in intervals of 10%. Thus, a number "4" represents 40% of luminous intensity, and a number 5 represents 50% of luminous intensity.

When the steering system turns, for example, 1º to the right, a method according to the invention converts this angular displacement into a number of rows, according to the resolution of the matrix arrangement. For example, in cases where the resolution is 0.2º per LED column, an angular displacement of 1º would be converted into 5 LED columns.

After calculating the number of LED columns, the control centre 7 shifts the operation of the light sources of the matrix arrangement 5 columns to the right, resulting an operation as the one shown in figure 4b. In this figure 4b, the operation of the LEDs of the same 20 columns have changed, thus providing a Dynamic Bending Light functionality 1º to the right side of the automotive vehicle. Since a matrix arrangement may include several hundred thousand of LEDs and the resolution is usually comprised between 0.01º per LED column and 0.5º per LED column, this shifting usually involves many columns of LEDs.

After this shifting has been carried out, it is usually recommended to check if the lighting points which are defined in official regulations are providing a suitable value of luminous intensity. For example, the luminous intensity in a point may be checked to verify if this accomplishes luminous standards.

In some cases, it is possible that the luminous intensity of the light emitted by some of the LEDs may be corrected. The control centre 7 may apply in these cases a correction of the value of the luminous intensity, depending on the luminous intensity of the fixed beam.

## Claims

1. Method for controlling a light pattern (1) provided by an automotive lighting device (10) of an automotive vehicle (100), wherein the light pattern (1) is provided at least by a matrix arrangement (6) of light sources (2), the method comprising the steps of
sensing a turn in a steering system (11) of the automotive vehicle (100); shifting the operation of some of the light sources (2) in the same direction as the sensed turn;
wherein before the step of shifting the operation of some of the light sources (2), the angular displacement of the steering system (11) is sensed and converted into a number of positions to shift, and then the step of shifting is carried out using this number of positions to shift; and
**characterized in that** the method further comprises after the step of shifting a step of internally checking the luminous intensity in one point of the light pattern in order to verify that the luminous intensity in the one point accomplishes its luminous intensity standards.

2. Method according to claim 1, wherein the light pattern comprises a fixed beam (3) provided by a first group (4) of solid-state light sources and a dynamic beam (5) provided by a matrix arrangement (6) of solid-state light sources, and the step of shifting the operation of some of the light sources is applied to at least part of the solid-state light sources of the matrix arrangement (6) which provide the dynamic beam.

3. Method according to claim 2, wherein the step of shifting the operation of some of the light sources (2) is applied to the whole number of solid-state light sources (2) of the matrix arrangement (6) which provide the dynamic beam.

4. Method according to any claims 2 or 3, further comprising a step of applying a correction in the luminous intensity of the light emitted by the solid-state light sources (2).

5. Method according to claim 4, wherein the correction depends on the luminous intensity of the fixed beam (3).

## Patentansprüche

1. Verfahren zur Steuerung eines Lichtmusters (1), das von einer Automobilbeleuchtungsvorrichtung (10) eines Automobilfahrzeugs (100) bereitgestellt wird, wobei das Lichtmuster (1) mindestens durch eine Matrixanordnung (6) von Lichtquellen (2) bereitgestellt wird, wobei das Verfahren die Schritte umfasst:
Abfühlen einer Richtungsänderung in einem Lenksystem (11) des Automobilfahrzeugs (100);
Verschieben des Betriebs von einigen der Lichtquellen (2) in die gleiche Richtung wie die abgefühlte Richtungsänderung;
wobei vor dem Schritt des Verschiebens des Betriebs von einigen der Lichtquellen (2) die Winkelverlagerung des Lenksystems (11) abgefühlt und in eine Anzahl zu verschiebender Positionen konvertiert wird und dann der Schritt des Verschiebens unter Verwendung dieser Anzahl an zu verschiebenden Positionen ausgeführt wird; und
**dadurch gekennzeichnet, dass** das Verfahren des Weiteren nach dem Schritt des Verschiebens einen Schritt des internen Prüfens der Leuchtstärke in einem Punkt des Lichtmusters umfasst, um zu verifizieren, dass die Leuchtstärke in dem einen Punkt ihre Leuchtstärkesstandards erfüllt.

2. Verfahren nach Anspruch 1, wobei das Lichtmuster einen festen Strahl (3), der durch eine erste Gruppe (4) von Festkörperlichtquellen bereitgestellt wird, und einen dynamischen Strahl (5) umfasst, der durch eine Matrixanordnung (6) von Festkörperlichtquellen bereitgestellt wird, und wobei der Schritt des Verschiebens des Betriebs von einigen der Lichtquellen auf mindestens einen Teil der Festkörperlichtquellen der Matrixanordnung (6) angewendet wird, welche den dynamischen Strahl bereitstellen.

3. Verfahren nach Anspruch 2, wobei der Schritt des Verschiebens des Betriebs von einigen der Lichtquellen (2) auf die gesamte Anzahl der Festkörperlichtquellen (2) der Matrixanordnung (6) angewendet wird, welche den dynamischen Strahl bereitstellen.

4. Verfahren nach einem der Ansprüche 2 oder 3, des Weiteren umfassend einen Schritt des Anwendens einer Korrektur in der Leuchtstärke des Lichts, welches durch Festkörperlichtquellen (2) emittiert wird.

5. Verfahren nach Anspruch 4, wobei die Korrektur von der Leuchtstärke des festen Strahls (3) abhängt.

## Revendications

1. Procédé de contrôle d'un motif lumineux (1) fourni par un dispositif d'éclairage automobile (10) d'un véhicule automobile (100), le motif lumineux (1) étant fourni au moins par un agencement matriciel (6) de sources de lumière (2), le procédé comprenant les étapes de
détection d'un virage dans un système de direction (11) du véhicule automobile (100) ;
décalage du fonctionnement de certaines des sources de lumière (2) dans la même direction que le virage détecté ;
dans lequel, avant l'étape de décalage du fonctionnement de certaines des sources de lumière (2), le déplacement angulaire du système de direction (11) est détecté et converti en un nombre de positions à décaler, et l'étape de décalage est ensuite réalisée au moyen de ce nombre de positions à décaler ; et
**caractérisé en ce que** le procédé comprend en outre, après l'étape de décalage, une étape de vérification interne de l'intensité lumineuse à un point donné du motif lumineux afin de vérifier que l'intensité lumineuse au point donné respecte ses normes d'intensité lumineuse.

2. Procédé selon la revendication 1, dans lequel le motif lumineux comprend un faisceau fixe (3) fourni par un premier groupe (4) de sources de lumière à semi-conducteurs et un faisceau dynamique (5) fourni par un agencement matriciel (6) de sources de lumière à semi-conducteurs, et l'étape de décalage du fonctionnement de certaines des sources de lumière est appliquée à au moins une partie des sources de lumière à semi-conducteurs de l'agencement matriciel (6) qui fournissent le faisceau dynamique.

3. Procédé selon la revendication 2, dans lequel l'étape de décalage du fonctionnement de certaines des sources de lumière (2) est appliquée au nombre entier de sources de lumière à semi-conducteurs (2) de l'agencement matriciel (6) qui fournissent le faisceau dynamique.

4. Procédé selon l'une quelconque des revendications 2 et 3, comprenant en outre une étape d'application d'une correction dans l'intensité lumineuse de la lumière émise par les sources de lumière à semi-conducteurs (2).

5. Procédé selon la revendication 4, dans lequel la correction dépend de l'intensité lumineuse du faisceau fixe (3).
